# EUROPÄISCHE PATENTANMELDUNG

(11) **EP 4 644 063 A1**
(43) Veröffentlichungstag der Anmeldung: **05.11.2025**
(21) Anmeldenummer: 24173471.4
(22) Anmeldetag: 30.04.2024
(51) Int. Cl.: B25J 15/00, B25J 15/06, B25J 19/00, B25J 19/02

(54) **GREIFER-SET UND DARAUS ZUSAMMENGESETZTE GREIFVORRICHTUNG**

(71) Anmelder: J. Schmalz GmbH, 72293 Glatten (DE)
(72) Erfinder: Stockburger, Ralf, 72293 Glatten (DE); Reinisch, Hermann, 72175 Dornhan (DE); Schleeh, Tobias, 72213 Altensteig (DE)
(74) Vertreter: DREISS Patentanwälte PartG mbB

(57) **Zusammenfassung**

Die Erfindung betrifft ein Greifer-Set (200) umfassend wenigstens zwei Greiferblöcke (10) und wenigstens ein von den Greiferblöcken (10) separat bereitgestelltes Zwischenstück (12) zur Weiterleitung von Betriebsfluid, insbesondere Unterdruck und/oder Überdruck, zwischen den Greiferblöcken (10). Die Erfindung betrifft auch eine aus einem Greifer-Set zusammengesetzte Greifvorrichtung.

## Beschreibung

Die Erfindung betrifft das Gebiet der Greifvorrichtungen, insbesondere Sauggreifvorrichtungen.

Greifvorrichtungen sind in vielfältiger Art und Weise aus dem Stand der Technik bekannt. Beispielsweise sind Sauggreifer bekannt, die eine Mehrzahl von Greifeinheiten, jeweils umfassend einen verlagerbaren Hubkolben und einen mit dem Hubkolben bewegungsgekoppelten Sauggreifer aufweisen. Bei solchen Sauggreifern ist es möglich, durch selektives Ausfahren einzelner Greifeinheiten den Sauggreifer an unterschiedliche Geometrien zu greifender Gegenstände flexibel anzupassen.

Die Erfindung beschäftigt sich mit der Aufgabe, eine kostengünstige und flexibel anpassbare Greiflösung zum Greifen von Gegenständen unterschiedlicher Geometrie zu schaffen. Dabei ist ein kompakter und einfacher Aufbau wünschenswert.

Diese Aufgabe wird erfindungsgemäß durch ein Greifer-Set mit den Merkmalen des Anspruchs 1 gelöst. Das Greifer-Set ist insbesondere zum Zusammenbauen einer Greifvorrichtung ausgebildet.

Das Greifer-Set umfasst wenigstens zwei Greiferblöcke und wenigstens ein, insbesondere von den Greiferblöcken separat bereitgestelltes, Zwischenstück.

Das wenigstens eine Zwischenstück ist zur Weiterleitung von Betriebsfluid, insbesondere Unterdruck und/oder Überdruck, zwischen zwei durch das Zwischenstück verbundenen Greiferblöcken ausgebildet.

Das Zwischenstück ist vorzugsweise wiederholbar mit einem Greiferblock verbindbar, zerstörungsfrei lösbar und wiederverbindbar. Im zusammengesetzten Zustand sind zwei benachbarte Greiferblöcke jeweils durch ein Zwischenstück verbunden.

Die Greiferblöcke weisen jeweils einen Grundkörper und wenigstens eine, vorzugsweise zwei oder mehr, an dem Grundkörper gehalterte Greifeinheiten zum Greifen eines Gegenstands auf.

Eine jeweilige Greifeinheit (bei mehreren Greifeinheiten jede Greifeinheit) umfasst einen Hubkolben und einen mit dem Hubkolben bewegungsgekoppelten Greifer, insbesondere Sauggreifer. Der Hubkolben (und somit der Greifer) ist entlang einer Hubachse zwischen einer axial eingefahrenen Konfiguration und einer axial ausgefahrenen Konfiguration relativ zu dem Grundkörper verstellbar. Die wenigstens eine Greifeinheit ist durch Betriebsfluid betreibbar. Insbesondere ist der Hubkolben durch Beaufschlagen mit Betriebsfluid aus einer eingefahrenen Konfiguration in eine ausgefahrene Konfiguration entlang der Hubachse überführbar. Insbesondere ist eine Greifwirkung des Greifers durch Beaufschlagen des Greifers mit Betriebsfluid aktivierbar.

Der Grundkörper weist wenigstens ein integriertes Betriebsfluidverteilersystem zur Verteilung von Betriebsfluid auf. Die wenigstens eine Greifeinheit ist über das wenigstens eine Betriebsfluidverteilersystem mit Betriebsfluid versorgbar. Insbesondere kann ein erstes Betriebsfluidverteilersystem, vorzugsweise Druckluftverteilersystem, zum Antreiben einer Verlagerungsbewegung des Hubkolbens entlang der Hubachse vorgesehen sein. Alternativ oder zusätzlich kann ein zweites Betriebsfluidverteilersystem, vorzugsweise Unterdruckverteilersystem, zum Betreiben des Greifers, insbesondere Sauggreifers, vorgesehen sein.

Zum Ankoppeln des Zwischenstücks weisen die Greiferblöcke an einer jeweiligen Koppelseite jeweils eine Zwischenstück-Koppelstelle auf. Insbesondere weist jeder Greiferblock zwei Zwischenstück-Koppelstellen auf, welche vorzugsweise an einander gegenüberliegenden Koppelseiten des Greiferblocks ausgebildet sind. Dies ermöglicht es mehrere Greiferblöcke, insbesondere mehr als zwei Greiferblöcke, in Reihe zu schalten. Die Koppelseiten können insbesondere Stirnseiten der Greiferblöcke sein.

An der Zwischenstück-Koppelstelle (bei mehreren Zwischenstück-Koppelstellen an jeder Zwischenstück-Koppelstelle) mündet zumindest eine Betriebsfluidöffnung des wenigstens einen Betriebsfluidverteilersystems. Insbesondere mündet an einer jeweiligen Zwischenstück-Koppelstelle eine Unterdrucköffnung des wenigstens einen Unterdruckverteilersystems. Zusätzlich kann an einer jeweiligen Zwischenstück-Koppelstelle eine Druckluftöffnung des wenigstens einen Druckluftverteilersystems münden.

Das Zwischenstück weist wenigstens einen Betriebsfluidkanal, insbesondere eine der Anzahl an Betriebsfluidöffnung an der Zwischenstück-Koppelstelle entsprechende Anzahl an Betriebsfluidkanälen zur Weiterleitung von Betriebsfluid zwischen den Greiferblöcken auf. Insbesondere weist das Zwischenstück, wenigstens einen Unterdruckkanal und/oder wenigstens einen Druckluftkanal auf.

Der wenigstens eine Betriebsfluidkanal ist derart ausgebildet und angeordnet, dass der Betriebsfluidkanal im angekoppelten Zustand des Zwischenstücks an der Zwischenstück-Koppelstelle mit der wenigstens einen Betriebsfluidöffnung strömungsverbunden ist. Insbesondere ist jedem Betriebsfluidkanal eine Betriebsfluidöffnung zugeordnet, sodass ein jeweiliger Betriebsfluidkanal im angekoppelten Zustand des Zwischenstücks an der Zwischenstück-Koppelstelle mit der ihm zugeordneten Betriebsfluidöffnung strömungsverbunden ist.

Ein solches Greifer-Set mit Greiferblöcken und medienführendem Zwischenstück ermöglicht einen einfachen modularen Aufbau einer Greifvorrichtung, sodass beispielsweise je nach Anwendungssituation Greifvorrichtungen unterschiedlicher Konfigurationen auf einfache Weise zusammengesetzt werden können. Beispielsweise ist es denkbar, dass eine Mehrzahl von Greiferblöcken bereitgestellt sind und in Abhängigkeit einer Handhabungsaufgabe, bspw. in Abhängigkeit eines zu greifenden Gegenstands, mehr oder weniger Greiferblöcke miteinander verbunden werden. Dadurch, dass das Zwischenstück medienführend ist, kann das in der Regel zeitaufwändige fluidische Verbinden mehrerer Greifmodule entfallen. Das Weiterleiten von Betriebsfluid über das Zwischenstück hat außerdem den Vorteil, dass nicht jeder Greiferblock mit einer externen Betriebsfluidversorgung verbunden werden muss. Auf diese Weise können bspw. Zuleitungen und somit mögliche Störkonturen beim Greifen reduziert werden.

Das Zwischenstück kann einteilig mit einem Greiferblock ausgebildet sein. Insbesondere kann jeder Greiferblock ein Zwischenstück aufweisen. Beispielsweise kann das Zwischenstück an den Grundkörper des Greiferblocks angeformt sein, bspw. mittels Spritzgusses an den Grundkörper angespritzt sein. Insbesondere ist es denkbar, dass die Greiferblöcke jeweils an einer ersten Koppelseite eine Zwischenstück-Koppelstelle aufweisen und an einer der ersten Koppelseite gegenüberliegenden zweiten Koppelseite das, bspw. angespritzte, Zwischenstück aufweisen.

Vorzugsweise ist das wenigstens eine Zwischenstück aber von den Greiferblöcken separat bereitgestellt. Insofern kann das Greifer-Set insbesondere wenigstens drei zunächst separate Teile umfassen (einen ersten Greiferblock, ein Zwischenstück und einen zweiten Greiferblock), die dann zu einer Greifvorrichtung zusammengesetzt werden können. Vorzugsweise umfasst das Greifer-Set n Greifer und n-1 Zwischenstücke. Insbesondere kann das Zwischenstück wiederholbar mit zwei Greiferblöcken verbindbar, zerstörungsfrei lösbar und wiederverbindbar ausgebildet sein.

Vorzugsweise umfasst das wenigstens eine Betriebsfluidverteilersystem ein Unterdruckverteilersystem zur Verteilung von Unterdruck. Insbesondere kann der Grundköper einen Unterdruckanschluss zum Anschluss an eine Unterdruckversorgung aufweisen. Alternativ oder zusätzlich kann das wenigstens eine Betriebsfluidverteilersystem ein Druckluftverteilersystem zur Verteilung von Druckluft aufweisen. Insbesondere kann der Grundköper einen Druckluftanschluss zum Anschluss an eine Druckluftversorgung aufweisen. Besonders bevorzugt ist es, wenn das wenigstens einen Betriebsfluidverteilersystem sowohl wenigstens ein Unterdruckverteilersystem als auch ein Druckluftverteilersystem umfasst, also der Grundkörper sowohl wenigstens ein Unterdruckverteilersystem als auch ein Druckluftverteilersystem aufweist.

Zwischenstück-Koppelstelle und Zwischenstück können derart ausgebildet sein, dass das Zwischenstück in einem gekoppelten Zustand an der Zwischenstück-Koppelstelle gehaltert, insbesondere mit dem Greiferblock fest verbunden, ist. Zwischenstück-Koppelstelle und Zwischenstück können auch derart ausgebildet sein, dass das Zwischenstück in einem gekoppelten Zustand lediglich lose mit dem Grundkörper verbunden ist.

Vorzugsweise ist das Zwischenstück in den Grundkörper einsteckbar ausgebildet. Es ist beispielsweise denkbar, dass das Zwischenstück eine oder mehrere Befestigungszapfen aufweist, welche in entsprechende Aussparungen an dem Grundkörper eines jeweiligen Greiferblocks einsteckbar sind.

Im Rahmen einer vorteilhaften Weiterbildung ist die Zwischenstück-Koppelstelle als Zwischenstück-Aufnahme ausgebildet, in welche das Zwischenstück zumindest abschnittsweise einsetzbar oder einsteckbar ist. Eine solche Ausgestaltung erleichtert eine Montage und Demontage. Insbesondere ist das Zwischenstück werkzeugfrei in die Zwischenstück-Aufnahme einsetzbar oder einsteckbar.

Im Rahmen einer vorteilhaften Realisierungsform kann die Zwischenstück-Aufnahme als Aussparung oder Vertiefung an dem Grundkörper, insbesondere an einer Grundkörper-Außenwandung, ausgebildet sein.

Weiterhin kann es vorteilhaft sein, wenn die Zwischenstück-Aufnahme derart ausgebildet ist, dass dann, wenn zwei Greiferblöcke über ein dazwischen angeordnetes Zwischenstück gekoppelt sind, die Grundkörper der beiden Greiferblöcke, insbesondere ein jeweiliger Gehäuseabschnitt, welcher die Zwischenstück-Aufnahme umgibt, aneinander anliegen. Auf diese Weise ist eine besonders kompakte Anordnung geschaffen. Zudem ist bei einer solchen Ausgestaltung das Zwischenstück vor Umgebungseinflüssen geschützt, was eine zuverlässige, leckagefreie Weiterleitung von Betriebsfluid begünstigt.

Vorzugsweise weist die Zwischenstück-Aufnahme eine Anlagefläche zur Anlage des Zwischenstücks auf. Die Anlagefläche kann orthogonal zu einer Einsetz- bzw. Einsteckrichtung angeordnet sein. Die Anlagefläche kann einen Anschlag für das Zwischenstück bilden. Bei einer Ausgestaltung der Zwischenstück-Aufnahme als Aussparung, kann die Anlagefläche beispielsweise durch eine Bodenfläche der Aussparung gebildet sein.

An der Anlagefläche können eine oder mehrere Aussparungen zur Aufnahme der vorstehend erwähnten Befestigungszapfen vorgesehen sein.

Die wenigstens eine Betriebsfluidöffnung kann von der Anlagefläche beabstandet sein, insbesondere an einer von der Anlagefläche beabstandeten Koppelfläche ausmünden.

Besonders bevorzugt ist es jedoch, wenn die wenigstens eine Betriebsfluidöffnung in die Anlagefläche ausmündet. Auf diese Weise ist eine besonders kompakte Ausgestaltung der Zwischenstück-Koppelstelle geschaffen. Zudem wird eine leckagefreie Verbindung zwischen Greiferblock und Zwischenstück begünstigt.

Eine Strömungsverbindung zwischen einer Betriebsfluidöffnung des Greiferblocks und einem der Betriebsfluidöffnung zugeordneten Betriebsfluidkanal des Zwischenstücks kann auf unterschiedliche Art und Weise erfolgen.

Es ist beispielsweise denkbar, dass der Betriebsfluidkanal an einer Koppelseite des Zwischenstücks eine Kanalöffnung aufweist, welche im gekoppelten Zustand von Greiferblock und Zwischenstück mit der dem Betriebsfluidkanal zugeordneten Betriebsfluidöffnung an der Zwischenstück-Koppelstelle fluchtet. Insbesondere kann das Zwischenstück derart in die Zwischenstück-Aufnahme einsteckbar sein, dass die Kanalöffnung mit der Betriebsfluidöffnung fluchtet.

Zur Abdichtung einer Strömungsverbindung zwischen Kanalöffnung bzw. Betriebsfluidkanal und zugeordneter Betriebsfluidöffnung können an der Zwischenstück-Koppelstelle und/oder an dem Zwischenstück selbst entsprechende Dichtungen vorgesehen sein. Es ist auch denkbar, dass das Zwischenstück als Ganzes aus einem abdichtenden Material, bspw. einem Kunststoff, insbesondere Elastomer, gefertigt ist. Dann kann es vorteilhaft sein, wenn das Zwischenstück einen die Kanalöffnung des wenigstens einen Betriebsfluidkanals einschließenden Materialabschnitt aufweist, welcher einen Dichtabschnitt bildet. An der Zwischenstück-Koppelstelle kann dann optional ein die wenigstens eine Betriebsfluidkanalöffnung einschließender zweiter Dichtabschnitt vorgesehen sein, beispielsweise in Form einer Dichtaufnahme zur Aufnahme des ersten Dichtabschnitts.

Im Rahmen einer besonders vorteilhaften Weiterbildung kann ein jeweiliger Betriebsfluidkanal des Zwischenstücks von einem Verbindungszapfen umgeben sein. Der Verbindungszapfen ist vorzugsweise derart ausgebildet, dass er in die dem Betriebsfluidkanal zugeordnete Betriebsfluidöffnung einsteckbar ist und somit insbesondere eine Strömungsverbindung zwischen Betriebsfluidverteilersystem und Betriebsfluidkanal herstellbar ist. Beispielsweise kann die Betriebsfluidöffnung als Aussparung in dem Grundkörper, insbesondere an der Anlagefläche der Zwischenstück-Aufnahme, ausgebildet sein, in welche der Verbindungszapfen einsteckbar ist. Auf diese Weise kann einerseits eine Haltefunktion bereitgestellt werden. Beispielswiese ist es denkbar, dass das Zwischenstück über den wenigstens einen Verbindungszapfen an dem Greiferblock gehaltert ist. Dies schließt jedoch nicht aus, dass das Zwischenstück weitere Befestigungszapfen (siehe oben) aufweisen kann, die ausschließlich eine Haltefunktionen erfüllen. Andererseits kann durch das Einstecken des Verbindungszapfens in die Betriebsfluidöffnung bspw. eine Ausrichtung des Zwischenstücks vereinfacht werden (Zentrierfunktion).

Besonders vorteilhaft kann es sein, wenn das Zwischenstück derart ausgebildet ist, dass durch Einstecken des Verbindungszapfens in die Betriebsfluidöffnung der Betriebsfluidkanal abgedichtet ist. Der Verbindungszapfen kann insofern den Betriebsfluidkanal abdichtend in der Betriebsfluidöffnung aufnehmbar sein.

Dies kann beispielsweise dadurch realisiert sein, dass an dem Zwischenstück ein den Verbindungszapfen umgebender erster Dichtabschnitt vorgesehen ist, welcher mit einem die Betriebsfluidöffnung umgebenden zweiten Dichtabschnitt an der Zwischenstück-Koppelstelle zusammenwirkt. Beispielsweise kann der erste oder der zweite Dichtabschnitt durch eine Dichtung, bspw. Dichtring, gebildet sein und der andere Dichtabschnitt kann als Dichtfläche zur Anlage der Dichtung oder als Dichtaufnahme zur Aufnahme der Dichtung ausgebildet sein.

Es ist aber auch denkbar, dass der Verbindungszapfen oder das Zwischenstück als Ganzes aus einem abdichtenden Material, bspw. einem Kunststoff, insbesondere Elastomer, gefertigt ist. Beim Einstecken des Verbindungszapfens in die Betriebsfluidöffnung kann dann beispielsweise der Verbindungszapfen an einer die Betriebsfluidöffnung umgebenden Wandung dichtend anliegen.

Bei Ausgestaltungen, bei denen das Zwischenstück von den Greiferblöcken separat bereitgestellt ist, weist das Zwischenstück vorzugsweise eine erste Koppelseite zur Verbindung mit einer Zwischenstück-Koppelstelle eines ersten Greiferblocks und eine gegenüberliegende zweite Koppelseite zur Verbindung mit einer Zwischenstück-Koppelstelle eines zweiten Greiferblock auf. Der wenigstens eine Betriebsfluidkanal erstreckt sich dann vorzugsweise von der ersten Koppelseite zu der zweiten Koppelseite. Insbesondere kann der Betriebsfluidkanal an einer ersten Seite des Zwischenstücks durch einen ersten Verbindungszapfen begrenzt sein, welcher in einer ersten Richtung hervorsteht, und an einer gegenüberliegenden zweiten Seite des Zwischenstücks durch einen zweiten Verbindungszapfen umgeben sein, welcher in einer zu der ersten Richtung entgegengesetzten zweiten Richtung hervorsteht.

Die erste und die zweite Koppelseite des Zwischenstücks können zueinander identisch ausgebildet sein. Insbesondere können dann auch die Zwischenstück-Koppelstellen zueinander identisch ausgebildet sein.

Die erste und die zweite Koppelseite des Zwischenstücks können auch unterschiedlich ausgebildet sein. Auf diese Weise kann das Risiko einer Fehlmontage reduziert werden. Dies kann insbesondere dann vorteilhaft sein, wenn bestimmte Schnittstellen nur unidirektional verbindbar sind, bspw. nachfolgend noch beschriebene elektrische Schnittstelle.

Insbesondere ist es dann denkbar, dass an einem jeweiligen Greiferblock eine erste Zwischenstück-Koppelstelle zur Verbindung mit der ersten Koppelseite des Zwischenstücks und - an einer gegenüberliegenden Seite - ein zweite Zwischenstück-Koppelstelle zur Verbindung mit der zweiten Koppelseite des Zwischenstücks vorgesehen sind.

Im Rahmen einer besonders vorteilhaften Weiterbildung kann das Zwischenstück außerdem eine elektrische Schnittstelle aufweisen. Die elektrische Schnittstelle kann zur Weiterleitung von Daten ausgebildet sein. Insofern kann es sich bei der elektrischen Schnittstelle um eine Datenschnittstelle handeln. Alternativ oder zusätzlich kann die elektrische Schnittstelle zum Weiterleiten von Strom ausgebildet sein.

Vorzugsweise ist dann an der Zwischenstück-Koppelstelle außerdem eine elektrische Koppelstelle zum Zusammenwirken mit der elektrischen Schnittstelle des Zwischenstücks vorgesehen. Die elektrische Koppelstelle und die elektrische Schnittstelle können beispielsweise als Stecker-/Buchsen-System ausgebildet sein.

Beispielsweise ist es denkbar, dass jeder Greiferblock eine eigene Steuereinrichtung aufweist. Die Steuereinrichtung eines Greiferblocks kann dann mit der elektrischen Koppelstelle des Greiferblocks elektrisch und/oder datentechnisch verbunden sein. Im zusammengekoppelten Zustand können dann die Steuereinrichtungen benachbarter Greiferblöcke über die elektrische Schnittstelle des Zwischenstücks miteinander elektrisch und/oder datentechnisch verbunden sein.

Weiter kann es vorteilhaft sein, wenn das Zwischenstück Sensorik zur Überwachung eines Greifzustands der wenigstens einen Greifeinheit eines mit dem Zwischenstück verbundenen Greiferblocks aufweist. Beispielsweise ist es denkbar, dass das Zwischenstück einen Drucksensor aufweist, welcher dazu ausgebildet ist, einen in einem Betriebsfluidkanal vorherrschenden Betriebsdruck (und somit einen Betriebsdruck in dem Betriebsfluidverteilersystem) zu messen.

Im Rahmen einer vorteilhaften Weiterbildung kann das Greifer-Set außerdem wenigstens ein Abdeckstück, insbesondere in Form einer Deckplatte, umfassen, welches dazu ausgebildet ist, eine Zwischenstück-Koppelstelle, welche nicht durch ein Zwischenstück belegt ist, abzudecken. Im zusammengesetzten Zustand können insofern nicht durch ein Zwischenstück belegte Zwischenstück-Aufnahmen der Greiferblöcke durch ein Abdeckstück, insbesondere Deckplatte, abgedeckt sein.

Das Abdeckstück ist insbesondere dazu ausgebildet, wenigstens eine Betriebsfluidöffnung, insbesondere alle Betriebsfluidöffnungen, abzudichten.

Der Greifer der wenigstens einen Greifeinheit kann grundsätzlich verschieden ausgebildet sein. Beispielsweise kann der Greifer ein mechanischer Greifer oder ein Magnetgreifer sein. Bei solchen Ausgestaltungen kann das Betriebsfluid insbesondere dazu dienen, den Hubkolben entlang der Hubachse zu verstellen, insbesondere aus der eingefahrenen Konfiguration in die ausgefahrene Konfiguration zu überführen.

Besonders bevorzugt ist es jedoch, wenn der Greifer ein Sauggreifer zum Ansaugen eines Gegenstands ist. Insofern handelt es sich bei der Greifeinheit vorzugsweise um eine Saugeinheit und bei den Greiferblöcken um Saugerblöcke.

Die Erfindung betrifft insofern insbesondere auch ein Sauggreifer-Set, umfassend
- wenigstens zwei Saugerblöcke, jeweils umfassend einen Grundkörper mit wenigstens einem integrierten Betriebsfluidverteilersystem, insbesondere Unterdruckverteilersystem, zur Verteilung von Betriebsfluid, und
   wenigstens eine Saugeinheit, welche und über das Betriebsfluidverteilersystem, insbesondere Unterdruckverteilersystem, mit Betriebsfluid, insbesondere Unterdruck, versorgbar ist, wobei die Saugeinheit einen entlang einer Hubachse aus- und wieder einfahrbar Hubkolben und einen mit dem Hubkolben bewegungsgekoppelten Sauggreifer umfasst,
- wenigstens ein, insbesondere von den Saugerblöcken separat bereitgestelltes, Zwischenstück zur
   Weiterleitung von Betriebsfluid, insbesondere Unterdruck und/oder Überdruck, zwischen zwei durch das Zwischenstück verbundenen Saugerblöcken,
wobei jeder Saugerblock an einer jeweiligen Koppelseite, insbesondere an zwei gegenüberliegenden Seiten jeweils, eine Zwischenstück-Koppelstelle zum Ankoppeln eines Zwischenstücks aufweist, wobei an der Zwischenstück-Koppelstelle eine Betriebsfluidöffnung des wenigstens einen Betriebsfluidverteilersystems mündet, wobei das Zwischenstück einen Betriebsfluidkanal, insbesondere Unterdruckkanal und/oder Druckluftkanal, derart aufweist, dass der Betriebsfluidkanal im angekoppelten Zustand des Zwischenstücks an der Zwischenstück-Koppelstelle mit der Betriebsfluidöffnung strömungsverbunden ist.

Bei einer Ausgestaltung mit Sauggreifern kann es dann vorteilhaft sein, wenn das wenigstens eine Betriebsfluidverteilersystem wenigstens ein Unterdruckverteilersystem, insbesondere für jede Saugeinheit ein eigenes Unterdruckverteilersystem, und optional ein Druckluftverteilersystem umfasst. Insbesondere kann an einer jeweiligen Zwischenstück-Koppelstelle wenigstens eine Unterdrucköffnung des wenigstens einen Unterdruckverteilersystems, insbesondere eine der Saugeinheiten entsprechende Anzahl an Unterdrucköffnungen, und optional wenigstens eine Druckluftöffnung des Druckluftverteilersystems münden. Das Zwischenstück umfasst dann insbesondere wenigstens einen Unterdruckkanal, insbesondere eine der Anzahl an Unterdrucköffnungen entsprechende Anzahl an Unterdruckkanälen, und optional wenigstens einen Druckluftkanal.

Vorzugsweise sind sowohl ein Unterdruckverteilersystem (zur Versorgung der Sauggreifer mit Unterdruck) als auch ein Druckluftverteilersystem (zur Versorgung des Hubkolbens mit Druckluft) vorgesehen.

Insbesondere kann dann der Grundkörper zumindest eines Greiferblocks / Saugerblocks einen Unterdruckanschluss zum Anschluss an eine externe Unterdruckversorgung aufweisen. Optional kann der Grundkörper zumindest eines Saugerblocks einen Druckluftanschluss zum Anschluss an eine externe Druckluftversorgung aufweisen.

Im Rahmen einer besonders vorteilhaften Ausgestaltung weist das Zwischenstück wenigstens einen Unterdruckkanal, wenigstens einen Überdruckkanal und wenigstens eine elektrische Schnittstelle auf.

Bei einer Ausgestaltung mit Sauggreifer kann dieser vorzugsweise durch Hubkolben hindurch mit Unterdruck versorgbar sein, bspw. über einen im Hubkolben vorgesehenen Unterdruckkanal. Vorzugsweise ist die wenigstens eine Greifeinheit derart ausgebildet, dass in der eingefahrenen Konfiguration des Hubkolbens eine Unterdruckversorgung des Sauggreifers (insbesondere ein Strömungsweg zwischen dem Unterdruckkanal im Hubkolben und dem Unterdruckverteilersystem) unterbrochen ist und in der Aktivkonfiguration dieser Strömungsweg freigegeben ist.

Es ist denkbar, dass alle Greiferblöcke des Greifer-Sets zueinander identisch ausgebildet sind. Insbesondere können zumindest die Grundkörper der Greiferblöcke zueinander identisch ausgebildet sein. Dies ermöglicht eine kostengünstige Fertigung, da Standardbauteile verwendet werden können. Um optional unterschiedliche Funktionen zu realisieren, können die Grundkörper dann beispielsweise durch Zusatzbauteile verändert werden. Beispielsweise ist es denkbar, dass alle Grundkörper einen Betriebsfluidanschluss aufweisen, aber nur bei einem Grundkörper dieser Anschluss geöffnet ist und die Anschlüsse der anderen Grundkörper durch einen Dichtstopfen verschlossen sind.

Es ist auch denkbar, dass unterschiedliche Greiferblock-Typen vorgesehen sind. Beispielsweise ist es denkbar, dass zumindest ein Greiferblock des Greifer-Sets als Einspeiseblock umfassend wenigstens einen Betriebsfluidanschluss, insbesondere einen Unterdruckanschluss und/oder einen Druckluftanschluss, ausgebildet ist. Weitere Greiferblöcke können dann beispielsweise als Erweiterungsblöcke ohne eigenen wenigstens einen Betriebsfluidanschluss ausgebildet sein, oder beispielsweise nur einen Druckluftanschluss, aber keinen Unterdruckanschluss aufweisen.

Die vorstehend genannte Aufgabe wird auch durch eine Greifvorrichtung zum Greifen eines Gegenstands gelöst, wobei die Greifvorrichtung aus zumindest einem der vorstehend beschriebenen Greifer-Sets zusammengesetzt ist. Die Greifvorrichtung umfasst insofern wenigstens zwei Greiferblöcke, wobei benachbarte Greiferblöcke mit einem Zwischenstück verbunden sind. Die Greifvorrichtung weist vorzugsweise n Greifer und n-1 Zwischenstücke auf.

Die vorstehend in Bezug auf das Greifer-Set genannten Vorteile und optionalen Merkmale können auch zur Ausgestaltung der Greifvorrichtung dienen, sodass zur Vermeidung von Wiederholungen auf vorstehende Offenbarung hierzu verwiesen wird.

Die Greifvorrichtung umfasst vorzugsweise zumindest zwei Greiferblöcke, welche über ein Zwischenstück miteinander fluidisch gekoppelt sind. Das Zwischenstück ist insofern insbesondere zwischen dem ersten Greiferblock und dem zweiten Greiferblock angeordnet.

Insbesondere ist das Zwischenstück mit seiner ersten Koppelseite mit einer Zwischenstück-Koppelstelle des ersten Greiferblocks gekoppelt und mit seiner zweiten Koppelseite mit einer Zwischenstück-Koppelstelle des zweiten Greiferblocks gekoppelt.

Im Rahmen einer vorteilhaften Weiterbildung kann die Greifvorrichtung einen dritten Greiferblock aufweisen, wobei der dritte Greiferblock über ein weiteres, zweites Zwischenstück mit dem zweiten Greiferblock gekoppelt ist.

Es ist denkbar, dass Betriebsfluid, insbesondere Unterdruck, über die beiden Zwischenstücke zwischen allen drei Saugerblöcken durchgeleitet wird. Es ist aber auch denkbar, dass beispielsweise wenigstens ein Betriebsfluidkanal, insbesondere zumindest der wenigstens eine Unterdruckkanal, des zweiten Zwischenstücks fluiddicht verschlossen ist. Auf diese Weise ist eine Segmentierung der Greifvorrichtung möglich.

Bei einer solchen Ausgestaltung kann dann beispielsweise einer der ersten und zweiten Greiferblöcke einen Betriebsfluidanschluss, insbesondere Unterdruckanschluss, aufweisen und zusätzlich der dritte Greiferblock oder ein optional mit dem dritten Greiferblock über ein drittes Zwischenstück verbundener weiterer Greiferblock einen weiteren Betriebsfluidanschluss, insbesondere Unterdruckanschluss, aufweisen.

Die Greiferblöcke können lediglich durch das Zwischenstück miteinander verbunden sein. Vorzugsweise sind die Greiferblöcke aber an einem gemeinsamen Träger, bspw. einer Flanschplatte eines Manipulators, befestigt. Zu diesem Zweck können die Grundkörper wenigstens einen Befestigungsabschnitt zur Befestigung an einem Träger, bspw. einer Flanschplatte eines Manipulators, aufweisen.

Nachfolgend sind weitere vorteilhafte Weiterbildungen der Greiferblöcke beschrieben, welche unabhängig von den vorstehend genannten Merkmalen vorgesehen sein können.

Der Grundkörper eines jeweiligen Greiferblocks kann ein- oder mehrteilig ausgebildet sein. Vorzugsweise ist der Grundkörper monolithisch ausgebildet. Insbesondere ist das wenigstens eine Betriebsfluidverteilersystem durch einen monolithisch ausgebildeten Abschnitt des Grundkörpers definiert.

Das Aus- und Einfahren des Hubkolbens einer jeweiligen Greifeinheit kann grundsätzlich auf verschiedene Art und Weise erfolgen. Vorzugsweise ist der Hubkolben druckbetätigt, insbesondere druckluftbetätigt, aus der eingefahrenen Konfiguration in die ausgefahrene Konfiguration überführbar. Insofern kann der Hubkolben durch Beaufschlagen eines entlang der Hubachse wirkenden Druckes (Unterdruck oder Überdruck) entlang der Hubachse verstellbar sein.

Besonders bevorzugt sind Ausgestaltungen, bei denen der Hubkolben durch Beaufschlagung mit Druckluft in Ausfahrrichtung verlagerbar ist, insbesondere ausgehend von der eingefahrenen Passivkonfiguration in die ausgefahrene Aktivkonfiguration überführbar ist. Beispielsweise kann der Hubkolben in einem Greifeinheitengehäuse verlagerbar sein, wobei in dem Greifeinheitengehäuse wenigstens eine Druckkammer vorgesehen ist, durch Beaufschlagen derer mit Druckluft eine Kraft auf den Hubkolben in Ausfahrrichtung ausgeübt wird. Insbesondere umfasst das wenigstens eine Betriebsfluidverteilersystem eines jeweiligen Greiferblocks dann ein Druckluftverteilersystem zum Leiten von Druckluft zu den Hubkolben.

Im Rahmen einer vorteilhaften Weiterbildung kann jeder Greiferblock außerdem eine Druckluft-Ventileinrichtung aufweisen, welche dazu ausgebildet ist, eine Druckluftversorgung des Hubkolbens, insbesondere der optional mehreren Hubkolben voneinander unabhängig, zu steuern. Die Druckluft-Ventileinrichtung kann insbesondere für jede Greifeinheit ein eigenes Druckluftventil aufweisen. Vorzugsweise ist die Druckluft-Ventileinrichtung in dem Grundkörper vorgesehen. Die vorstehend erwähnte optionale Steuereinrichtung kann insbesondere dazu ausgebildet sein, die Druckluft-Ventileinrichtung anzusteuern.

Die wenigstens eine Greifeinheit kann derart ausgebildet sein, dass der Hubkolben in die eingefahrene Konfiguration beaufschlagt, insbesondere federbeaufschlagt, ist.

Insbesondere kann sich der Hubkolben in einer Ausgangskonfiguration in der eingefahrenen Konfiguration befinden.

Der Hubkolben einer Greifeinheit ist vorzugsweise in einem Greifeinheitengehäuse der Greifeinheit gelagert. Das Greifeinheitengehäuse kann sich länglich entlang der Hubachse erstrecken, was eine kompakte Anordnung mehrerer Greifeinheiten nebeneinander begünstigt. Das Greifeinheitengehäuse kann ein- oder mehrteilig ausgebildet sein. Das Greifeinheitengehäuse kann zumindest abschnittsweise durch den Grundkörper gebildet sein. Das Greifeinheitengehäuse kann zumindest abschnittsweise von dem Grundkörper separat bereitgestellt und an dem Grundkörper befestigt sein.

Der Hubkolben kann verdrehsicher um die Hubachse gehaltert sein. Beispielsweise ist es denkbar, dass eine Verdrehsicherung über miteinander zusammenwirkende Kreissegmente realisiert ist. Eine solche Verdrehsicherung ist somit nicht klemmend.

Die Greiferblöcke können außerdem einen oder mehrere Sensoren umfassen. Beispielsweise können Sensoren zur Überwachung einer Verschiebestellung (eingefahrene Konfiguration / ausgefahrene Konfiguration) des Hubkolbens vorgesehen sein. Alternativ oder zusätzlich kann auch wenigstens ein Sensor zur Abstandsüberwachung oder Kollisionswarnung vorgesehen sein. Die Sensoren können mit der optionalen Steuereinrichtung verbunden sein und von dieser ansteuerbar sein.

Es ist denkbar, dass jeder Greiferblock nur eine Greifeinheit aufweist. Vorzugsweise ist aber eine Mehrzahl von Greifeinheiten pro Greiferblock vorgesehen. Dann kann es vorteilhaft sein, wenn die Greifeinheiten derart an dem Grundkörper gehaltert sind, dass die Hubachsen der Greifeinheiten zueinander parallel verlaufen. Auf diese Weise ist eine besonders kompakte Anordnung geschaffen, welche sich besonders für das Greifen von flächenhaft erstreckten Bauteilen wie Blechen eignet. Vorzugsweise sind die Hubkolben der Greiferblöcke dann voneinander unabhängig betätigbar, d.h. aus- und einfahrbar. Insofern können selektiv einzelne Greifeinheiten aktiviert werden.

Die Erfindung wird im Folgenden anhand der Figuren näher erläutert. Es zeigen:
Fig. 1 skizzierte Darstellung einer beispielhaften Ausgestaltung eines Greifer-Sets umfassend einen Greiferblock und ein Zwischenstück;
Fig. 2 Greifer-Set gemäß Figur 1 wobei das Zwischenstück in eine Zwischenstück-Koppelstelle des Greiferblocks eingesteckt ist;
Fig. 3 skizzierte Darstellung einer beispielhaften Ausgestaltung einer aus mehreren Greifer-Sets zusammengesetzten Greifvorrichtung umfassend mehrere Greiferblöcke, welche über Zwischenstücke miteinander verbunden sind;
Fig. 4 skizzierte Darstellung eines Greiferblocks, bei dem eine Zwischenstück-Koppelstelle durch ein Abdeckstück abgedeckt ist; und
Fig. 5A,B Schnittansichten des Greiferblocks gemäß Figur 1 zur Erläuterung einer Funktionsweise der Greifeinheiten, mit Hubkolben in eingefahrener Passivkonfiguration (Ansicht A) und ausgefahrener Aktivkonfiguration (Ansicht B).

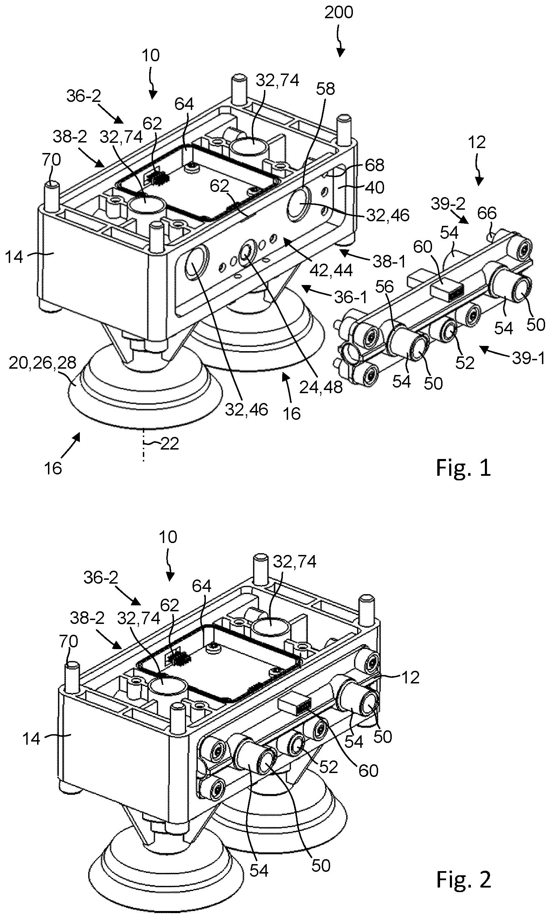

Die Figur 1 zeigt eine beispielhafte Ausgestaltung eines Greifer-Sets, welches insgesamt mit dem Bezugszeichen 200 bezeichnet ist. Das Greifer-Set 200 umfasst einen Greiferblock 10 und ein Zwischenstück 12 zur Weiterleitung von Betriebsfluid zwischen dem Greiferblock 10 und einem weiteren (in Figur 1 nicht gezeigten) Greiferblock 10. Bei nicht dargestellten Ausgestaltungen kann das Greifer-Set 200 auch mehr Greiferblöcke und mehr Zwischenstücke 12 umfassen.

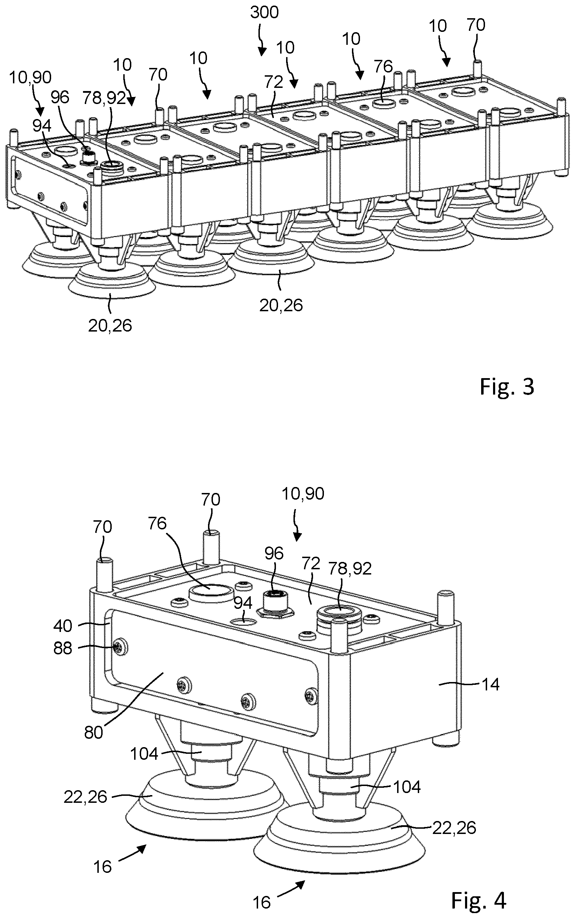

Eine beispielhafte Ausgestaltung einer Greifvorrichtung, die aus mehreren Greiferblöcken 10 und Zwischenstücken 12 zusammengesetzt ist, ist in Figur 3 dargestellt und insgesamt mit Bezugszeichen 300 bezeichnet.

Jeder Greiferblock 12 umfasst einen Grundkörper 14 und zwei daran gehalterte Greifeinheiten 16. Bei nicht dargestellten Ausgestaltungen können auch mehr oder weniger Greifeinheiten 16 vorgesehen sein.

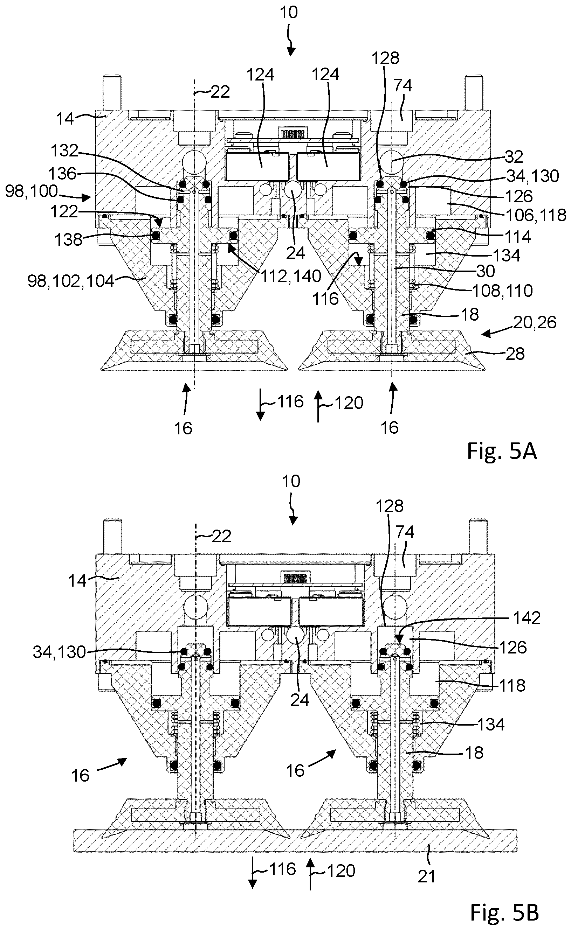

Jede Greifeinheit 16 umfasst einen Hubkolben 18 (vgl. Figuren 5A und 5B, in Figur 1 nicht sichtbar) und einen mit dem Hubkolben 18 bewegungsgekoppelten Greifer 20 zum Greifen eines Gegenstands 21 (vgl. Figur 5B).

Wie nachfolgend noch im Detail erläutert, ist der Hubkolben 18 entlang einer Hubachse 22 zwischen einer axial eingefahrenen Konfiguration und einer axial ausgefahrenen Konfiguration verlagerbar.

Im konkreten Beispiel ist der Hubkolben 18 einer jeweiligen Greifeinheit 16 durch Beaufschlagen mittels Druckluft aus der eingefahrenen Konfiguration in die ausgefahrene Konfiguration überführbar. Zu diesem Zweck umfasst jeder Greiferblock 12 ein Druckluftverteilersystem 24, über welches die Hubkolben 18 mit Druckluft versorgbar sind (nachfolgend noch im Detail beschrieben). Das Druckluftverteilersystem 24 bildet ein erstes Betriebsfluidverteilersystem 26 des Greiferblocks 12.

Bei nicht dargestellten Ausgestaltungen kann der Hubkolben 18, zusätzlich oder alternativ, auch durch Beaufschlagen mittels Unterdrucks aus der eingefahrenen Konfiguration in die ausgefahrene Konfiguration überführbar sein.

Im dargestellten Beispiel sind die Greifer 20 als Sauggreifer 26 ausgebildet. Insofern handelt es sich bei den Greifeinheiten 16 um Saugeinheiten und bei den Greiferblöcken 10 um Saugerblöcke. Bei nicht dargestellten Ausgestaltungen ist es aber auch denkbar, dass die Greifer 20 oder zumindest eine Teilmenge der Greifer 20 andere Greifmechanismen umfassen.

Im Beispiel gemäß Figur 1 sind die Sauggreifer 26 jeweils durch einen Saugkörper 28, insbesondere Elastomersaugkörper, gebildet. In der beispielhaften Konfiguration gemäß Figur 1 sind die Sauggreifer 26 (Saugkörper 28) zudem zueinander identisch ausgebildet. Bei nicht dargestellten Ausgestaltungen können Art und Größe der Sauggreifer 26 aber auch variieren. Beispielsweise ist es denkbar, dass an unterschiedlichen Greifeinheiten 16 Saugkörper 28 unterschiedlicher Größe vorgesehen sind.

Wie nachfolgend noch im Detail erläutert, sind die Sauggreifer 26 über einen im jeweiligen Hubkolben 18 ausgebildeten Unterdruckkanal 30 mit Unterdruck versorgbar. Der Unterdruckkanal 30 ist wiederum über ein Unterdruckverteilersystem 32 mit Unterdruck versorgbar. Beispielhaft ist für jede Greifeinheit 16 ein eigenes Unterdruckverteilersystem 32 vorgesehen. Es ist aber auch möglich, dass die Greifeinheiten 16 über ein gemeinsames Unterdruckverteilersystem 32 mit Unterdruck versorgt werden. Das Unterdruckverteilersystem 32 bildet ein zweites Betriebsfluidverteilersystem 26 des Greiferblocks 10.

Eine Unterdruckversorgung des Unterdruckkanals 30 und somit eine Unterdruckversorgung des Sauggreifers 26 wird vorzugsweise über eine optionale Absperreinrichtung 34 derart gesteuert, dass in der eingefahrenen Konfiguration des Hubkolbens 18 ein Strömungsweg zwischen Unterdruckkanal 30 und Unterdruckverteilersystem 32 und somit zwischen Sauggreifer 26 und Unterdruckverteilersystem 32 abgesperrt ist (Passivkonfiguration) und in der ausgefahrenen Konfiguration des Hubkolbens 18 dieser Strömungsweg freigegeben ist (Aktivkonfiguration).

Wie vorstehend erwähnt, dient das Zwischenstück 12 als Koppelstück zur Weiterleitung von Betriebsfluid zwischen zwei benachbarten Greiferblöcken 10. Im konkreten Beispiel mit Druckluftverteilersystem 24 und Unterdruckverteilersystem 32 ist das Zwischenstück 12 dazu ausgebildet, sowohl Druckluft als auch Unterdruck zwischen zwei durch das Zwischenstück 12 gekoppelten Greiferblöcken 10 weiterzuleiten.

Im Beispiel weisen die die Greiferblöcke an zwei gegenüberliegenden Koppelseiten 36-1, 36-1 jeweils eine Zwischenstück-Koppelstelle 38-1, 38-2 zum Ankoppeln eines Zwischenstücks 12 auf.

Im zusammengesetzten Zustand der Greifvorrichtung 300 ist das Zwischenstück 12 dann mit einer ersten Koppelseite 39-1 mit der Zwischenstück-Koppelstelle 38-1, 38-2 eines ersten Greiferblocks 10 und mit einer zweiten Koppelseite 39-2 mit der Zwischenstück-Koppelstelle 38-1, 38-2 eines weiteren Greiferblocks 10 gekoppelt.

Auf diese Weise lassen sich durch Hintereinanderreihen von Greiferblöcken 10 und dazwischen angeordneten Zwischenstücken 12 Greifvorrichtungen 300 mit unterschiedlicher Ausdehnung auf einfache Weise realisieren.

Bei nicht dargestellten Ausgestaltungen ist es aber grundsätzlich auch denkbar, dass ein jeweiliger Greiferblock 10 nur eine einzelne Zwischenstück-Koppelstelle aufweist und an der gegenüberliegenden Seite (statt einer weiteren Zwischenstück-Koppelstelle) das Zwischenstück 12 an den Grundkörper 14 angeformt ist, bspw. mittels Spritzgusses angespritzt ist.

Im Beispiel sind die Zwischenstück-Koppelstellen 38-1, 38-2 zueinander identisch ausgebildet und entsprechend die Koppelseiten 39-1, 39-2 des Zwischenstücks 12 zueinander identisch ausgebildet. Zur Vereinfachung der Lesbarkeit wird daher nachfolgend lediglich auf die in Figur 1 sichtbare Zwischenstück-Koppelstelle 38-1 und deren Wechselwirkung mit dem Zwischenstück 12 Bezug genommen. Die Ausführungen gelten aber analog auch für die weiteren Zwischenstück-Koppelstellen.

Wie aus Figur 1 ersichtlich, ist die Zwischenstück-Koppelstelle 38-1 an dem Grundkörper 14 ausgebildet. Die Zwischenstück-Koppelstelle 38-1 ist beispielhaft und bevorzugt als Zwischenstück-Aufnahme 40 zum Einstecken des Zwischenstücks 12 ausgebildet (vgl. Figur 2).

Eine Bodenfläche 42 der Zwischenstück-Aufnahme 40 bildet dabei eine Anlagefläche 44 für das Zwischenstück im gekoppelten Zustand.

Zwischenstück-Aufnahme 40 und Zwischenstück 12 sind dabei vorzugsweise derart dimensioniert, dass in einem zusammengesetzten Zustand die Grundkörper 14 benachbarter Greiferblöcke 10 aneinander anliegen (vgl. Figur 3). Das Zwischenstück 12 ist insofern in den beiden Zwischenstück-Aufnahmen 40 der Greiferblöcke 10 aufgenommen.

Wie aus Figur 1 ersichtlich, münden die Unterdruckverteilersysteme 32 an der Anlagefläche 44 jeweils mit einer Unterdrücköffnung 46 aus. Im Beispiel mündet auch das Druckluftverteilersystem 24 mit einer Druckluftöffnung 48 in die Anlagefläche 44 aus.

Das Zwischenstück 12 weist für jede der Betriebsfluidöffnungen (Unterdrucköffnungen 46 und Druckluftöffnung 48) einen Betriebsfluidkanal auf. Im Beispiel weist das Zwischenstück 12 insofern zwei Unterdruckkanäle 50 und einen Druckluftkanal 52 auf.

Beispielhaft und bevorzugt sind die Unterdrückkanäle 50 und der Druckluftkanal 52 an jeder Koppelseite 39-1, 39-2 des Zwischenstücks 12 von einem jeweiligen Verbindungszapfen 54 umgeben. Wie vorstehend erwähnt, sind die Verbindungszapfen 54 derart dimensioniert, dass die Verbindungszapfen 54 in die zugeordnete Betriebsfluidöffnung 46, 48 einschiebbar sind und somit eine Strömungsverbindung herstellbar ist (vgl. Figur 2).

Zum Abdichten einer jeweiligen Strömungsverbindung können am Zwischenstück 12 entsprechende Dichtungen 56, bspw. in Form von die Betriebsfluidkanäle (Unterdruckkanäle 50 und Druckluftkanal 52) umgebenden O-Ringen, vorgesehen sein. Beispielhaft können dann um die Betriebsfluidöffnungen 46, 48 entsprechende Dichtungsaufnahmen 58 zur Aufnahme der Dichtungen 56 ausgebildet sein. Bei nicht dargestellten Ausgestaltungen kann die Abdichtung aber auch auf andere Weise erfolgen.

Im Beispiel weist das Zwischenstück 12 außerdem eine optionale elektrische Schnittstelle 60 auf. Die elektrische Schnittstelle 60 kann zur Weiterleitung von Daten ausgebildet sein. Insofern kann es sich bei der elektrischen Schnittstelle 60 um eine Datenschnittstelle handeln. Alternativ oder zusätzlich kann die elektrische Schnittstelle 60 zum Weiterleiten von Strom ausgebildet sein.

Wie aus Figur 1 ersichtlich, ist an den Zwischenstück-Koppelstellen 38-1, 38-2 entsprechend jeweils eine elektrische Koppelstelle 62 vorgesehen sein. Die elektrische Schnittstelle 60 und die elektrische Koppelstelle 62 können insbesondere als Steckverbindung ausgebildet sein.

Wie vorstehend erwähnt, kann jeder Greiferblock 10 eine optionale Steuereinrichtung (nicht dargestellt) aufweisen, welche mit der elektrischen Koppelstelle 60 verbunden ist. Die Steuereinrichtung kann beispielsweise in einer Steuereinrichtungsaufnahme 64 des Grundkörpers 14 angeordnet sein.

Im Beispiel weist das Zwischenstück 12 außerdem optionale Befestigungszapfen 66 auf, welche in entsprechende Befestigungsaufnahmen 68 an der Zwischenstück-Koppelstelle 38-1, 38-2 aufnehmbar, insbesondere einsteckbar sind.

Es ist grundsätzlich denkbar, dass die Greiferblöcke 10 durch das Zwischenstück 12 mechanisch verbunden sind. Insbesondere kann aber eine Trägerplatte (in den Figuren nicht gezeigt), bspw. eine Flanschplatte zur Verbindung mit einem Manipulator, insbesondere Roboter, vorgesehen sein, an welcher die Greiferblöcke 10 befestigt sind. Zu diesem Zweck können die Grundkörper 14 optional entsprechende Befestigungsbolzen 70 aufweisen.

In den Figuren 1 und 2 sind die Grundkörper 14 nach oben offen gezeigt. Im Betriebszustand sind die Grundkörper 14 aber nach oben durch einen Deckel 72 abgedeckt.

Wie aus Figur 1 ersichtlich, weisen die Unterdruckverteilersysteme 32 außer den Unterdrucköffnungen 46 an den Zwischenstück-Koppelstellen 38-1, 38-2 jeweils eine weitere Versorgungsöffnung 74 auf. Die Versorgungsöffnungen 74 können entweder durch einen Dichtstopfen 76 verschlossen sein oder mit einem Anschlussstutzen 78 zur Verbindung mit einer externen Unterdruckversorgung (bspw. Gebläse, Ejektor oder Pumpe) versehen sein (vgl. Figur 3).

Wie aus den Figuren 3 und 4 ersichtlich sind Zwischenstück-Koppelstellen 38-1, 38-2, welche nicht durch ein Zwischenstück 12 belegt sind (bspw. die endständigen Zwischenstück-Koppelstellen der Greifvorrichtung 300 gemäß Figur 3) durch ein Abdeckstück 80, insbesondere in Form einer Deckelplatte, abgedeckt. Das Abdeckstück 80 ist insbesondere dazu ausgebildet, die Betriebsfluidöffnungen 46, 48 abzudichten. Beispielsweise kann das Abdeckstück über entsprechende Befestigungsschrauben 82 mit dem Grundkörper 14 verschraubt sein.

Wie vorstehend erwähnt, können die Greiferblöcke 10 untereinander identisch ausgebildet sein. Insbesondere ist es aber denkbar, dass zumindest ein Greiferblock 10 (in Figur 3 der links Greiferblock) als Einspeiseblock 90 ausgebildet ist, welcher entsprechende Anschlüsse nach außen aufweist. Wie aus Figur 4 ersichtlich, umfasst der Einspeiseblock 90 einen mit dem Unterdruckverteilersystem 32 verbundenen Unterdruckanschluss 92 (Anschlussstutzen 78) zum Anschluss an eine externe Unterdruckversorgung. Der Einspeiseblock 90 weist außerdem einen mit dem Druckluftverteilersystem 24 verbundenen Druckluftanschluss 94 zum Anschluss an eine externe Druckluftversorgung auf. Darüber hinaus weist der Einspeiseblock einen mit der elektrischen Koppelstelle 62 (bspw. unter Zwischenschaltung einer Steuereinrichtung) verbundenen Daten- und/oder Stromanschluss 96 auf. Wie vorstehend beschrieben können dann Unterdruck, Druckluft und Daten/Strom über die Zwischenstücke 12 an die weiteren Greiferblöcke 10 einer Greifvorrichtung 300 weitergeleitet werden.

Eine beispielhafte Konfiguration der Greifeinheiten 16, insbesondere eine Funktionsweise der Hubkolben 16, wird nachfolgend unter Bezugnahme auf die Figuren 5A und 5B erläutert.

Wie aus Figur 5A ersichtlich, sind die Hubkolben 16 in einem jeweiligen Greifeinheitengehäuse 98 entlang der Hubachse 22 verschiebbar geführt. Das Greifeinheitengehäuse 98 ist im Beispiel mehrteilig ausgebildet und umfasst einen ersten oberen Abschnitt 100, welcher durch den Grundkörper 14 gebildet ist, und einen zweiten, unteren Abschnitt 102, welcher durch einen mit dem Grundkörper 14 verbundenen Aufsatz 104 bereitgestellt ist. Bei nicht dargestellten Ausgestaltungen kann das Greifeinheitengehäuse 98 aber auch einteilig ausgebildet sein und an dem Grundkörper 14 gehaltert sein.

Das Greifeinheitengehäuse 98 begrenzt einen Gehäuseinnenraum 106, in welchem der Hubkolben 18 entlang der Hubachse 22 verlagerbar geführt ist.

Im Beispiel ist der Hubkolben 18 mittels einer optionalen Federeinrichtung 108 in die eingefahrene Konfiguration beaufschlagt. Die Federeinrichtung 108 umfasst eine Druckfeder 110. Die Druckfeder 110 stützt sich mit einem ersten Ende an einer Gehäuseinnenwandung des Greifeinheitengehäuses 98 (im Beispiel an einer Gehäuseinnenwandung des unteren Abschnitts 102 / Aufsatzes 104) ab und mit dem zweiten Ende an einer ersten Stirnseite 112 einer radialen Auskragung 114 des Hubkolbens 18 ab (in den Figuren ist der Übersichtlichkeit halber lediglich ein Teilabschnitt der Feder 110 gezeigt).

Die Stirnseite 112 der radialen Auskragung 114 dient vorzugsweise als Anschlag, um - bei Anlage an einem Absatz 116 der Gehäuseinnenwandung des Greifeinheitengehäuses 98 - eine Verschiebebewegung des Hubkolbens 18 in Ausfahrrichtung zu begrenzen (vgl. Figur 5B). Die radiale Auskragung 114 definiert insofern die ausgefahrene Konfiguration (Endstellung).

Um den Hubkolben 18 aus der eingefahrenen Konfiguration - entgegen der Federbeaufschlagung in Ausfahrrichtung 116 auszufahren, ist in dem Gehäuseinnenraum 106 eine Überdruckkammer 118 ausgebildet, durch Beaufschlagen derer mit Druckluft eine in Ausfahrrichtung 116 wirkende Kraft auf den Hubkolben 18 ausgeübt wird. Im konkreten Beispiel begrenzt der Hubkolben 18 die Überdruckkammer 118 mit einer in einer Einfahrrichtung 120 orientierten Stirnseite 122 der radialen Auskragung 114. Insofern wirkt ein in der Überdruckkammer 118 vorherrschender Überdruck auf die radiale Auskragung 114.

Die Überdruckkammer 118 ist über das vorstehend erwähnte Druckluftverteilersystem 24 mit Druckluft versorgbar. Zur Steuerung einer Druckluftversorgung der Überdruckkammer 118 und somit einer Verlagerung des Hubkolbens 118 in Ausfahrrichtung 116 weist der Greiferblock 10 außerdem eine Ventileinrichtung 124 auf, mittels welcher eine Strömungsverbindung zwischen dem Druckluftverteilersystem 24 und der Überdruckkammer 118 wahlweise abgesperrt oder freigegeben werden kann. Insbesondere ist für jede Greifeinheit 16 eine eigene Ventileinrichtung, insbesondere ein eigenes Druckluftventil vorgesehen.

Wie vorstehend erwähnt, kann der Greiferblock 10 optional außerdem eine integrierte Steuereinrichtung (nicht dargestellt) zum Ansteuern der Ventileinrichtung(en) aufweisen.

Wie vorstehend erwähnt, weist der Hubkolben 16 einen innenliegenden Unterdruckkanal 30 auf, über welchen der Sauggreifer 26 mit Unterdruck versorgbar ist.

Die Versorgung des Unterdruckkanals 30 mit Unterdruck erfolgt im Beispiel über eine im Gehäuseinnenraum 106 ausgebildete erste Unterdruckkammer 126. Die Unterdruckkammer 126 ist über eine Kammeröffnung 128 mit dem vorstehend erwähnten Unterdruckverteilersystem 32 verbunden.

Wie aus Figur 5A ersichtlich, ist die Kammeröffnung 128 in der axial eingefahrenen Konfiguration (Passivkonfiguration) durch eine am Hubkolben 18 angeordnete erste Dichteinrichtung 130 abgedichtet, sodass eine Unterdruckversorgung der ersten Unterdruckkammer 126 und somit des Unterdruckkanals 30 und somit des Sauggreifers 26 abgesperrt ist. Durch Verlagern des Hubkolbens 18 in Ausfahrrichtung 116 (bspw. durch Beaufschlagen der Überdruckkammer 118 mit Druckluft) wird die erste Dichteinrichtung 130 von der Kammeröffnung 128 abgehoben, sodass Unterdruck über das Unterdruckverteilersystem 32 in die erste Unterdruckkammer 126 und von dort über einen radialen Zufuhrkanal 132 in den Unterdruckkanal 30 einströmen kann. In der ausgefahrenen Konfiguration nimmt der Sauggreifer 26 dann eine Aktivkonfiguration ein, in welcher der Sauggreifer 26 mit Unterdruck versorgt ist und somit einen Gegenstand ansaugen kann.

Insofern wird durch Beaufschlagen der Überdruckkammer 118 einerseits ein Ausfahren des Hubkolbens 18 in Ausfahrrichtung 116 bewirkt und gleichzeitig eine Unterdruckversorgung des Sauggreifers 26 geöffnet. Durch die Ventileinrichtung 124 werden insofern zwei Funktionen gesteuert.

Die in den Figuren 5A und 5B gezeigte Greifeinheiten 16 sind optional derart ausgebildet, dass der Hubkolben 18 - bei Öffnen der Kammeröffnung 128 der ersten Unterdruckkammer 126 - durch die Wirkung des Unterdrucks in Ausfahrrichtung 116 beaufschlagt wird. Diese nachfolgend noch näher beschriebene Selbsthaltungsfunktion ist vorteilhaft, aber für die erfindungsgemäße Ausgestaltung nicht wesentlich.

Wie beispielsweise aus Figur 5B ersichtlich, ist der Hubkolben 18 derart ausgebildet, dass er den Gehäuseinnenraum 106 in die erste Unterdruckkammer 126, eine zweite Unterdruckkammer 134 und die vorstehend erwähnte Überdruckkammer 118 unterteilt, wobei die Überdruckkammer 118 im Beispiel zwischen erster Unterdruckkammer 128 und zweiter Unterdruckkammer 134 angeordnet ist. Die Kammern 118, 126, 134 sind dabei durch Veränderung einer Verschiebestellung des Hubkolbens 18 entlang der Hubachse 22 in ihrer Größe veränderbar.

Im konkreten Beispiel trennt der Hubkolben 18 mittels einer zweiten Dichteinrichtung 136 einen Bereich des ersten Gehäuseinnenraums 106 ab, welcher die erste Unterdruckkammer 126 bildet. Die vorstehend erwähnte radiale Auskragung 114 trennt wiederum einen in Ausfahrrichtung 116 dahinter angeordneten Abschnitt des Gehäuseinnenraums 106 in die Überdruckkammer 118 und die zweite Unterdruckkammer 134 ab. Zur Abdichtung der Überdruckkammer 118 gegenüber der zweiten Unterdruckkammer 145 ist eine dritte Dichteinrichtung 138, bspw. in Form eines O-Rings, vorgesehen.

Die erste Unterdruckkammer 126 und die zweite Unterdruckkammer 134 sind über den Unterdruckkanal 30 miteinander strömungsverbunden, sodass die zweite Unterdruckkammer 134 über die erste Unterdruckkammer 126 mit Unterdruck versorgbar ist. In der ersten Unterdruckkammer 126 und in der zweiten Unterdruckkammer 134 herrscht insofern insbesondere stets der gleiche Druck.

Wird die Überdruckkammer 118 zumindest kurzzeitig mit Druckluft beaufschlagt, wirkt die Druckluft auf den Hubkolben 18, sodass der Hubkolben 18 entgegen der Federbeaufschlagung durch die Druckfeder 110 in Ausfahrrichtung 116 bewegt wird und somit wie vorstehend beschrieben die Kammeröffnung 128 geöffnet wird. In Folge dessen wird Unterdruck in die erste Unterdruckkammer 126 und schließlich über den Unterdruckkanal 30 in die zweite Unterdruckkammer 134 (und weiter in den Sauggreifer 26) geleitet.

Die Unterdruckkammern 126, 134 und der Hubkolben 18 sind dabei derart bemessen, dass durch den in den Unterdruckkammern 126, 134 dann vorliegenden Unterdruck eine in Ausfahrrichtung 116 wirkende Kraft auf den Hubkolben 18 ausgeübt wird. Im Beispiel ist dies dadurch realisiert, dass der Hubkolben 16 erste Flächenabschnitte 140 aufweist, welche derart orientiert sind, dass durch Einwirken des in den Unterdruckkammern 126, 134 vorherrschenden Unterdrucks auf die ersten Flächenabschnitte 140 eine in Ausfahrrichtung 116 wirkende Kraft auf den Hubkolben 18 ausgeübt wird. Im Beispiel sind solche erste Flächenabschnitte 140 beispielsweise durch die in Ausfahrrichtung 116 orientierte Stirnfläche 112 der radialen Auskragung 114 gebildet.

Außerdem sind zweite Flächenabschnitte 142 vorgesehen (vgl. Figur 5B), welche derart orientiert sind, dass durch Einwirken des in den Unterdruckkammern 126, 134 vorherrschenden Unterdrucks auf die zweiten Flächenabschnitte 142 eine in Einfahrrichtung 120 wirkende Kraft auf den Hubkolben 18 ausgeübt wird. Im Beispiel sind solche zweite Flächenabschnitte 142 beispielsweise durch die axialen Endflächen des Hubkolbens 18 gebildet, welche die erste Unterdruckkammer 126 begrenzen (vgl. Figur 2B).

Eine Summe aller ersten Flächenabschnitte 140 ist dabei größer als eine Summe aller zweiten Flächenabschnitte 142, sodass netto eine Kraft in Ausfahrrichtung 116 auf den Hubkolben 18 wirkt.

## Patentansprüche

1. Greifer-Set (200), umfassend
- wenigstens zwei Greiferblöcke (10), jeweils umfassend
einen Grundkörper (14) mit wenigstens einem integrierten Betriebsfluidverteilersystem (24, 32) zur Verteilung von Betriebsfluid und wenigstens eine an dem Grundkörper (14) gehalterte Greifeinheit (16), welche über das Betriebsfluidverteilersystem (24, 32) mit Betriebsfluid, insbesondere Unterdruck, versorgbar ist, wobei die Greifeinheit (16) einen entlang einer Hubachse (22) aus- und wieder einfahrbaren Hubkolben und einen mit dem Hubkolben bewegungsgekoppelten Greifer, insbesondere Sauggreifer, zum Greifen eines Gegenstands (21) umfasst
- wenigstens ein Zwischenstück (12) zur Weiterleitung von Betriebsfluid, insbesondere Unterdruck und/oder Überdruck, zwischen den Greiferblöcken (10),
wobei jeder Greiferblock (10) an einer Koppelseite (36-1, 36-2), insbesondere an zwei gegenüberliegenden Koppelseiten jeweils, eine Zwischenstück-Koppelstelle (38-1, 38-2) zum Ankoppeln eines Zwischenstücks (12) aufweist, wobei an der Zwischenstück-Koppelstelle (38-1, 38-2) eine Betriebsfluidöffnung (46, 48) des wenigstens einen Betriebsfluidverteilersystems (24, 32) mündet, wobei das Zwischenstück (12) einen Betriebsfluidkanal (50, 52), insbesondere Unterdruckkanal und/oder Druckluftkanal, derart aufweist, dass der Betriebsfluidkanal (50, 52) im angekoppelten Zustand des Zwischenstücks (12) an der Zwischenstück-Koppelstelle (38-1, 38-2) mit der Betriebsfluidöffnung (46, 48) strömungsverbunden ist.

2. Greifer-Set (200) nach Anspruch 1, wobei die Zwischenstück-Koppelstelle (38-1, 38-2) als Zwischenstück-Aufnahme (40) ausgebildet ist, in welche das Zwischenstück (12) zumindest abschnittsweise einsetzbar oder einsteckbar ist.

3. Greifer-Set (200) nach dem vorherigen Anspruch, wobei die Zwischenstück-Aufnahme (40) eine Anlagefläche (44) zur Anlage des Zwischenstücks (12) aufweist, wobei die wenigstens eine Betriebsfluidöffnung (46, 48) in die Anlagefläche (44) ausmündet.

4. Greifer-Set (200) nach einem der vorherigen Ansprüche, wobei der Betriebsfluidkanal (50, 52) von einem Verbindungszapfen (54) umgeben ist, welcher in die Betriebsfluidöffnung (46, 48) einsteckbar ist.

5. Greifer-Set (200) nach einem der vorherigen Ansprüche, wobei das Zwischenstück (12) derart ausgebildet ist, dass durch Einstecken des Verbindungszapfens (54) in die Betriebsfluidöffnung (46, 48) der Betriebsfluidkanal (50, 52) abgedichtet ist.

6. Greifer-Set (200) nach einem der vorherigen Ansprüche, wobei das Zwischenstück (12) außerdem eine elektrische Schnittstelle (60) zur Weiterleitung von Daten und/oder Strom zwischen den durch das Zwischenstück (12) verbundenen Greiferblöcken (10) aufweist.

7. Greifer-Set (200) nach dem vorherigen Anspruch, wobei an der Zwischenstück-Koppelstelle (38-1, 38-2) außerdem eine elektrische Koppelstelle (62) zum Zusammenwirken mit der elektrischen Schnittstelle (60) des Zwischenstücks (12) vorgesehen ist.

8. Greifer-Set (200) nach dem vorherigen Anspruch, wobei jeder Greiferblock eine eigene Steuereinrichtung aufweist, wobei die Steuereinrichtung mit der elektrischen Koppelstelle (62) des jeweiligen Greiferblocks (10) elektrisch und/oder datentechnisch verbunden ist.

9. Greifer-Set (200) nach einem der vorherigen Ansprüche, wobei das Zwischenstück (12) Sensorik zur Überwachung eines Greifzustands der wenigstens einen Greifeinheit (16) eines mit dem Zwischenstück (12) verbundenen Greiferblocks (10) aufweist, insbesondere einen Drucksensor zur Erfassung eines in einem Betriebsfluidkanal (50, 52) vorherrschenden Betriebsdrucks.

10. Greifer-Set (200) nach einem der vorherigen Ansprüche, außerdem umfassend wenigstens ein Abdeckstück (80), insbesondere in Form einer Deckplatte, welches dazu ausgebildet ist, eine nicht durch ein Zwischenstück (12) belegte Zwischenstück-Koppelstelle (38-1, 38-2) abzudecken, insbesondere wobei das Abdeckstück (80) dazu ausgebildet ist, die wenigstens eine Betriebsfluidöffnung (50, 52) abzudichten.

11. Greifer-Set (200) nach einem der vorherigen Ansprüche, wobei der jeweilige Grundkörper (14) der Greiferblöcke (10) monolithisch aufgebaut ist.

12. Greifer-Set (200) nach einem der vorherigen Ansprüche, der Greifer (20) als Sauggreifer (26) zum Ansaugen eines Gegenstands ausgebildet ist, wobei das wenigstens eine Betriebsfluidverteilersystem (26) wenigstens ein Unterdruckverteilersystem (32), insbesondere für jede Greifeinheit ein eigenes Unterdruckverteilersystem (32), und optional ein Druckluftverteilersystem (24) umfasst, wobei an der Zwischenstück-Koppelstelle (38-1, 38-2) wenigstens eine Unterdrucköffnung (46) des wenigstens einen Unterdruckverteilersystems (32), insbesondere eine der Greifeinheiten (16) entsprechende Anzahl an Unterdrucköffnungen (46), und optional wenigstens eine Druckluftöffnung (48) des Druckluftverteilersystems (24) münden, wobei das Zwischenstück (12) wenigstens einen Unterdruckkanal (50), insbesondere eine der Anzahl von Unterdrucköffnungen (46) entsprechende Anzahl an Unterdruckkanälen (50), und optional wenigstens einen Druckluftkanal (52) aufweist.

13. Greifer-Set (200) nach einem der vorherigen Ansprüche, wobei das Zwischenstück (12) wenigstens einen Unterdruckkanal (50), wenigstens einen Druckluftkanal (52) und wenigstens eine elektrische Schnittstelle (62) aufweist.

14. Greifvorrichtung (300), zusammengesetzt aus wenigstens einem Greifer-Set (200) nach einem der vorherigen Ansprüche, umfassend zwei Greiferblöcke (10), welche über ein Zwischenstück (12) miteinander gekoppelt sind, wobei das Zwischenstück (12) mit einer Zwischenstück-Koppelstelle (38-1) des ersten Greiferblocks (10) gekoppelt ist und wobei das Zwischenstück (12) mit einer Zwischenstück-Koppelstelle (38-2) des zweiten Greiferblocks (10) gekoppelt ist.

15. Greifvorrichtung (300) nach dem vorherigen Anspruch, außerdem umfassend einen dritten Greiferblock (10), welcher über ein zweites Zwischenstück (12) mit dem zweiten Greiferblock (10) gekoppelt ist, wobei wenigstens ein Betriebsfluidkanal, insbesondere zumindest der wenigstens eine Unterdruckkanal (50), des zweiten Zwischenstücks (12) fluiddicht verschlossen ist.
